# EUROPEAN PATENT APPLICATION

(11) **EP 2 354 972 A1**
(43) Date of publication of application: **10.08.2011**
(21) Application number: 10152452.8
(22) Date of filing: 02.02.2010
(51) Int. Cl.: G06F 17/30

(54) **File sharing using customized images**

(71) Applicant: RESEARCH IN MOTION LIMITED, Waterloo, Ontario N2L 3W8 (CA)
(72) Inventor: Hymel, James, Waterloo Ontario N2L 5Z5 (CA)
(74) Representative: MERH-IP Matias Erny Reichl Hoffmann

(57) **Abstract**

There is described a method, mobile device, and network for sharing files. The method comprises receiving a destination image on the mobile device, the destination image being a recognizable pattern having destination information associated thereto; retrieving the destination information; matching a file with the destination image; and transferring the file to the destination using the destination information.

## Description

### FIELD

This application relates to the field of image sharing, and more particularly, to sharing images taken using a mobile device by sending them to an email address, an FTP site, a wireless picture frame, a social network, another mobile device, etc.

### BACKGROUND

The proliferation of technology means file sharing between various devices has increased tremendously. It may be convenient to send a file from a mobile device to a laptop and a home computer. If the file is a picture, it may be desirable to share this file with multiple parties, such as grandparents, friends, spouses, etc. The user of a mobile device may want to provide this picture to more than one source, such as a wireless picture frame, a social network account, an email address etc. However, the process of sending a file to the appropriate destination may not be simple.

For example, sending the picture to a social network site may require entering identification and a password, and following a series of steps to download the picture to the site. Sending the picture to an email address may require that the picture first be saved on the mobile device, the address be entered in a new email message, the picture be retrieved from the mobile device, attached to the email message, and sent off. This series of steps can become confusing for someone who is not comfortable with technology, and errors can occur at various stages of the process, such as entering a wrong address or erasing the picture instead of saving it.

Therefore, there is a need to provide a method of sharing files that will simplify the process and remove some of the potentially error-prone steps.

### SUMMARY

In some aspects, there is provided a method for sharing files from a mobile device comprising: receiving a destination image on the mobile device, the destination image being a recognizable pattern having destination information associated thereto; retrieving the destination information; matching a file with the destination image; and transferring the file to the destination using the destination information.

In other aspects, there is provided a mobile device comprising: a memory for storing a destination image, the destination image being a recognizable pattern having destination information associated thereto; a processor coupled to the memory; and a file sharing application running on the processor and adapted for retrieving the destination information; matching a file with a destination image; and transferring the file to the destination using the destination information.

In yet other aspects, there is provided a network comprising: at least one mobile device comprising: a memory for storing a destination image, the destination image being a recognizable pattern having destination information associated thereto; a processor coupled to the memory; and at least one server in communication with the at least one mobile device; and a file sharing application residing at least in part on one of the at least one mobile device and the at least one server and adapted for: retrieving the destination information; matching a file with a destination image; and transferring the file to the destination using the destination information.

Throughout the present description, a "file" will be understood to be any collection of related data or program records stored as a unit with a single name, such as a picture, an image, a Word™ document, an Excel™ spreadsheet, or any other document which may be transferred from a source to a destination.

### BRIEF DESCRIPTION OF THE DRAWINGS

For a better understanding of the various embodiments described herein and to show more clearly how they may be carried into effect, reference will now be made, by way of example only, to the accompanying drawings which show at least one example embodiment and in which:
FIG. 1 is a block diagram of an example embodiment of a mobile device;
FIG. 2 is a block diagram of an example embodiment of a communication subsystem component of the mobile device of FIG. 1;
FIG.. 3 is an example block diagram of a node of a wireless network;
FIG. 4 is a block diagram illustrating components of a host system in one example configuration for use with the wireless network of FIG. 3 and the mobile device of FIG. 1;
FIG. 5 is a flowchart of an example embodiment of a method for sharing files from a mobile device;
FIG.. 6 is a schematic of an example embodiment of a bar code as a destination image;
FIG. 7 is a schematic of an example embodiment of a word and number as a destination image;
FIGS. 8A-8E are example embodiments of destination images; and
FIG. 9 illustrates an example embodiment of a home network with a PC having a plurality of peripherals connected thereto.

### DETAILED DESCRIPTION

It will be appreciated that for simplicity and clarity of illustration, where considered appropriate, reference numerals may be repeated among the figures to indicate corresponding or analogous elements.. In addition, numerous specific details are set forth in order to provide a thorough understanding of the embodiments described herein. However, it will be understood by those of ordinary skill in the art that the embodiments described herein may be practiced without these specific details.. In other instances, well-known methods, procedures and components have not been described in detail so as not to obscure the embodiments described herein. Also, the description is not to be considered as limiting the scope of the embodiments described herein.

The embodiments described herein generally relate to a mobile wireless communication device, hereafter referred to as a mobile device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below.. Examples of applicable communication devices include pagers, cellular phones, cellular smart-phones, wireless organizers, personal digital assistants, computers, laptops, handheld wireless communication devices, wirelessly enabled notebook computers and the like.

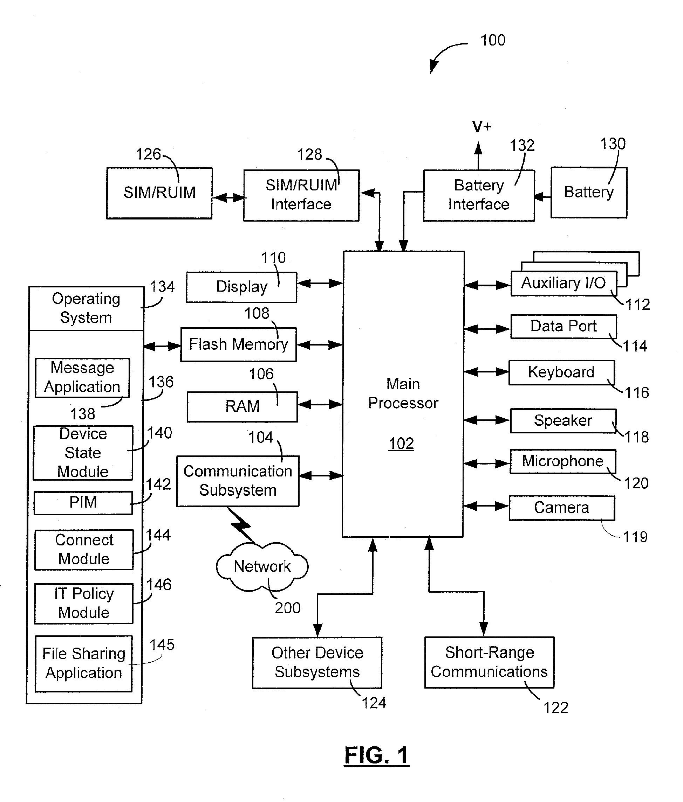

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 1 through 4.

Referring first to FIG. 1, shown therein is a block diagram of an example embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this example embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one example implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication system Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a camera 119, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108"

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

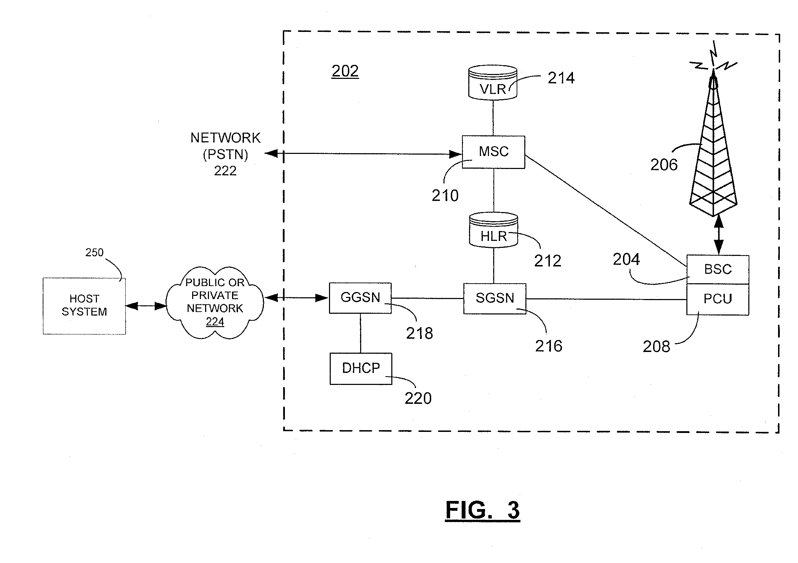

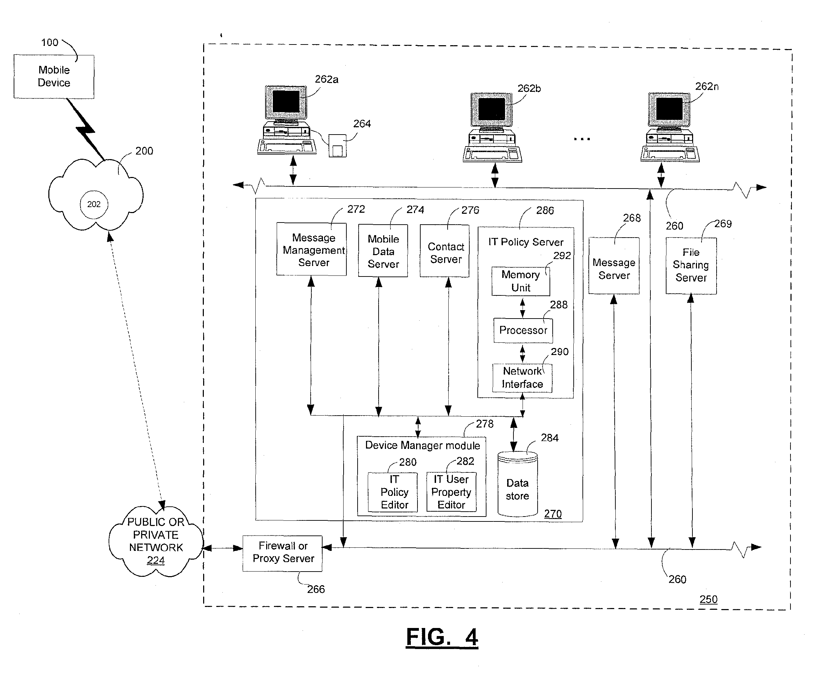

The mobile device 100 also includes a connect module 144, and an IT policy module 146. The connect module 144 implements the communication protocols that are required for the mobile device 100 to communicate with the wireless infrastructure and any host system, such as an enterprise system, that the mobile device 100 is authorized to interface with. Examples of a wireless infrastructure and an enterprise system are given in FIGS. 3 and 4, which are described in more detail below.

The connect module 144 includes a set of APIs that can be integrated with the mobile device 100 to allow the mobile device 100 to use any number of services associated with the enterprise system. The connect module 144 allows the mobile device 100 to establish an end-to-end secure, authenticated communication pipe with the host system. A subset of applications for which access is provided by the connect module 144 can be used to pass IT policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

The IT policy module 146 receives IT policy data that encodes the IT policy. The IT policy module 146 then ensures that the IT policy data is authenticated by the mobile device 100. The IT policy data can then be stored in the flash memory 106 in its native form. After the IT policy data is stored, a global notification can be sent by the IT policy module 146 to all of the applications residing on the mobile device 100. Applications for which the IT policy may be applicable then respond by reading the IT policy data to look for IT policy rules that are applicable.

The IT policy module 146 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module 146 can determine which applications are affected by the IT policy data and send a notification to only those applications. In either of these cases, for applications that aren't running at the time of the notification, the applications can call the parser or the IT policy module 146 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 146 sends an acknowledgement back to the host system to indicate that the IT policy data was received and successfully applied.

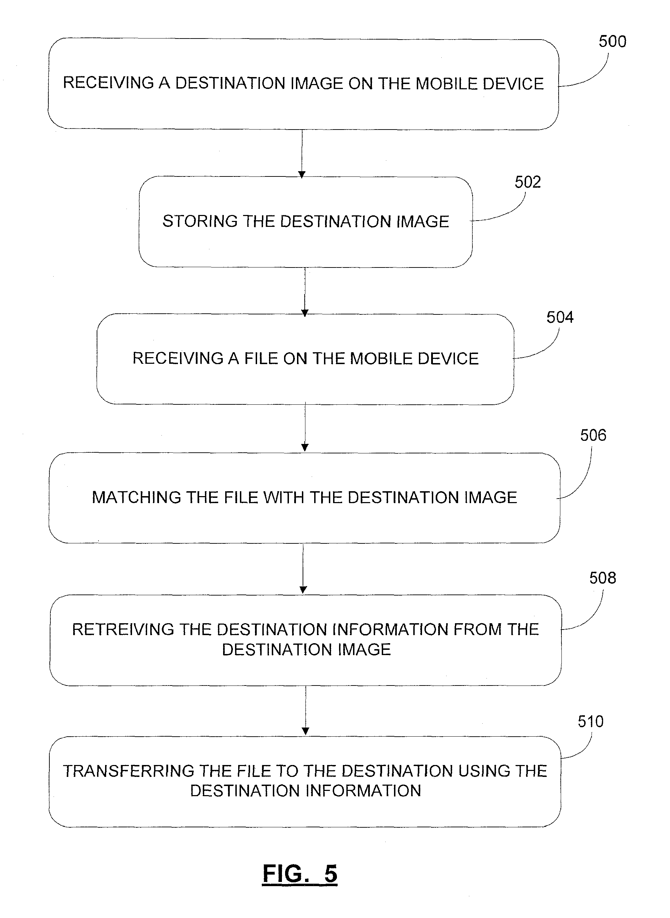

The mobile device 100 also includes a file sharing application 145, which may reside in whole or only in part on the mobile device 100. If present only in part, the other part may be present on a remote server, such as file sharing server 269. The file sharing application 145 is configured to transfer a file from the mobile device 100 to a destination in accordance with destination information taken from a destination image. This will be explained in more detail below with respect to the flowchart of Fig. 5.

Other types of software applications can also be installed on the mobile device 100. These software applications can be third party applications, which are added after the manufacture of the mobile device 100. Examples of third party applications include games, calculators, utilities, etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100. Transferring of files to various destinations may also be enabled using the secure communication applications.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication. The data port 114 may also be used for outgoing data, such as transferring files to any peripheral connected to the mobile device 100 through a direct connection, for example a laptop, a USB key, a flash memory card, etc.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

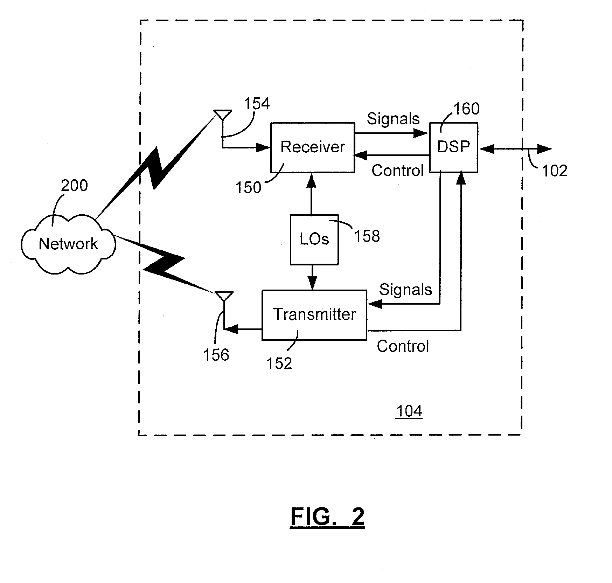

Referring now to FIG. 2, an example block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in FIG. 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to FIG. 3, a block diagram of an example implementation of a node 202 of the wireless network 200 is shown. In practice, the wireless network 200 comprises one or more nodes 202. In conjunction with the connect module 144, the mobile device 100 can communicate with the node 202 within the wireless network 200. In the example implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device 100 in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

Referring now to FIG. 4, shown therein is a block diagram illustrating components of an example configuration of a host system 250 that the mobile device 100 can communicate with in conjunction with the connect module 144. The host system 250 will typically be a corporate enterprise or other local area network (LAN), but may also be a home office computer or some other private system, for example, in variant implementations. In this example shown in FIG. 4, the host system 250 is depicted as a LAN of an organization to which a user of the mobile device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's mobile device 100 is situated on a LAN connection. The cradle 264 for the mobile device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the mobile device 100, and may be particularly useful for bulk information updates often performed in initializing the mobile device 100 for use. The information downloaded to the mobile device 100 may include certificates used in the exchange of messages.

It will be understood by persons skilled in the art that the user computers 262a-262n will typically also be connected to other peripheral devices, such as printers, etc. which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this example configuration. More generally, the host system 250 may represent a smaller part of a larger network (not shown) of the organization, and may comprise different components and/or be arranged in different topologies than that shown in the example embodiment of FIG. 4.

To facilitate the operation of the mobile device 100 and the wireless communication of messages and message-related data between the mobile device 100 and components of the host system 250, a number of wireless communication support components 270 can be provided. In some implementations, the wireless communication support components 270 can include a message management server 272, a mobile data server 274, a contact server 276, and a device manager module 278. The device manager module 278 includes an IT Policy editor 280 and an IT user property editor 282, as well as other software components for allowing an IT administrator to configure the mobile devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the mobile devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this example embodiment, the mobile device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile device 100. The wireless VPN router allows a VPN connection to be established directly through a specific wireless network to the mobile device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device 100 are initially received by a message server 268 of the host system 250. Such messages may originate from any number of sources. For instance, a message may have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some example implementations of the message server 268 include a Microsoft Exchange™ server, a Lotus Domino™ server, a Novell Groupwise™ server, or another suitable mail server installed in a corporate environment. In some implementations, the host system 250 may comprise multiple message servers 268. The message server 268 may also be adapted to provide additional functions beyond message management, including the management of data associated with calendars and task lists, for example.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the mobile device 100. Alternatively, the data store associated with the message server 268 can store all of the messages for the user of the mobile device 100 and only a smaller number of messages can be stored on the mobile device 100 to conserve memory. For instance, the most recent messages (i.e. those received in the past two to three months for example) can be stored on the mobile device 100.

When operating the mobile device 100, the user may wish to have e-mail messages retrieved for delivery to the mobile device 100. The message application 138 operating on the mobile device 100 may also request messages associated with the user's account from the message server 268. The message application 138 may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own e-mail address, and messages addressed specifically to the mobile device 100 are automatically redirected to the mobile device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile device 100. The message management server 272 also facilitates the handling of messages composed on the mobile device 100, which are sent to the message server 268 for subsequent delivery.

For example, the message management server 272 may monitor the user's "mailbox" (e.g. the message store associated with the user's account on the message server 268) for new e-mail messages, and apply user-definable filters to new messages to determine if and how the messages are relayed to the user's mobile device 100. The message management server 272 may also compress and encrypt new messages (e.g. using an encryption technique such as Data Encryption Standard (DES), Triple DES, or Advanced Encryption Standard (AES)) and push them to the mobile device 100 via the shared network infrastructure 224 and the wireless network 200. The message management server 272 may also receive messages composed on the mobile device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile device 100 can be defined (e.g. by an administrator in accordance with IT policy) and enforced by the message management server 272. These may include whether the mobile device 100 may receive encrypted and/or signed messages, minimum encryption key sizes, whether outgoing messages must be encrypted and/or signed, and whether copies of all secure messages sent from the mobile device 100 are to be sent to a pre-defined copy address, for example.

The message management server 272 may also be adapted to provide other control functions, such as only pushing certain message information or pre-defined portions (e.g. "blocks") of a message stored on the message server 268 to the mobile device 100. For example, in some cases, when a message is initially retrieved by the mobile device 100 from the message server 268, the message management server 272 may push only the first part of a message to the mobile device 100, with the part being of a pre-defined size (e.g. 2 KB). The user can then request that more of the message be delivered in similar-sized blocks by the message management server 272 to the mobile device 100, possibly up to a maximum pre-defined message size. Accordingly, the message management server 272 facilitates better control over the type of data and the amount of data that is communicated to the mobile device 100, and can help to minimize potential waste of bandwidth or other resources.

The mobile data server 274 encompasses any other server that stores information that is relevant to the corporation. The mobile data server 274 may include, but is not limited to, databases, online data file repositories, customer relationship management (CRM) systems, or enterprise resource planning (ERP) applications.

The contact server 276 can provide information for a list of contacts for the user in a similar fashion as the address book on the mobile device 100. Accordingly, for a given contact, the contact server 276 can include the name, phone number, work address and e-mail address of the contact, among other information. The contact server 276 can also provide a global address list that contains the contact information for all of the contacts associated with the host system 250.

In one example embodiment, a file sharing server 269 is provided to manage file sharing in accordance with some embodiments of a file sharing method. The file sharing server 269 may receive an image with encoded or embedded destination information from a destination source, such as a social website, a wireless picture frame, an email account, etc. The file sharing server 269 may also receive the image with destination information from the mobile device 100. Alternatively, only the destination information may be received by the file sharing server 269, having already been retrieved from the destination image by the mobile device 100. Retrieving the destination information from the destination image may be done at the file sharing server 269. Redistribution of the file to the one or more destination may be done by the file sharing server 269.

Redistribution of the file is done using the destination information, which may include an address, such as an email address, an IP address or a website account, and other necessary information, such as account identification and password information to access the given destination. In some example embodiments, the destination information is data that identifies the destination, and the actual address of the destination is retrieved from a memory or database once the destination has been identified. For example, the destination information may be "John Smith, home computer". Once the file sharing server 269 either retrieves this information from the destination image or receives this information from the mobile device 100, a database or memory may be accessed to obtain the IP address of the home computer of John Smith. The file sharing server 269 operates in a similar fashion as the message server 268.

It will be understood by persons skilled in the art that the message management server 272, the mobile data server 274, the contact server 276, the device manager module 278, the data store 284 and the IT policy server 286 do not need to be implemented on separate physical servers within the host system 250. For example, some or all of the functions associated with the message management server 272 may be integrated with the message server 268, or some other server in the host system 250. Alternatively, the host system 250 may comprise multiple message management servers 272, particularly in variant implementations where a large number of mobile devices need to be supported. Similarly, the message server 268 and the file sharing server 269 do not need to be implemented on separate physical servers and some or all of the functions may be integrated within one server.

Alternatively, in some embodiments, the IT policy server 286 can provide the IT policy editor 280, the IT user property editor 282 and the data store 284. In some cases, the IT policy server 286 can also provide the device manager module 278. The processor 288 of the IT policy server 286 can be used to perform the various steps of a method for providing IT policy data that is customizable on a per-user basis as explained further below and in conjunction with FIGS. 5 to 8. The processor 288 can execute the editors 280 and 282. In some cases, the functionality of the editors 280 and 282 can be provided by a single editor. In some cases, the memory unit 292 can provide the data store 284.

The device manager module 278 provides an IT administrator with a graphical user interface with which the IT administrator interacts to configure various settings for the mobile devices 100. As mentioned, the IT administrator can use IT policy rules to define behaviors of certain applications on the mobile device 100 that are permitted such as phone, web browser or Instant Messenger use. The IT policy rules can also be used to set specific values for configuration settings that an organization requires on the mobile devices 100 such as auto signature text, WLAN/VolP/VPN configuration, security requirements (e.g. encryption algorithms, password rules, etc.), specifying themes or applications that are allowed to run on the mobile device 100, and the like.

Fig. 5 is a flowchart illustrating an embodiment for the method of sharing files from a mobile device. Some of the steps illustrated in the flowchart may be performed in an order other than that which is described. Also, it should be appreciated that not all of the steps described in the flow chart are required to be performed, that additional steps may be added, and that some of the illustrated steps may be substituted with other steps.

A destination image is received at step 500. The destination image may be received by email, by download, or by camera capture. For example, the user may capture a picture of the destination image displayed on a screen using the camera 119 of the mobile device 100.

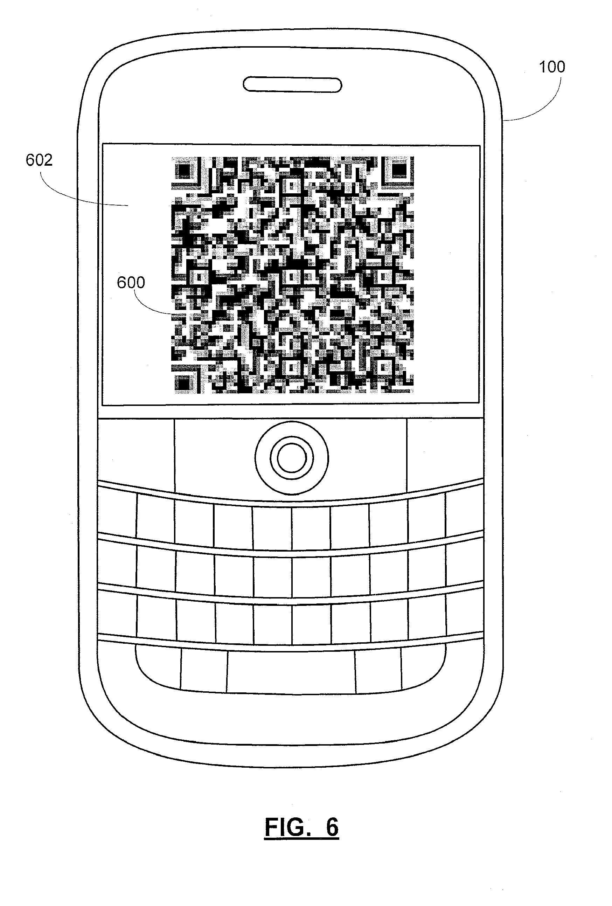

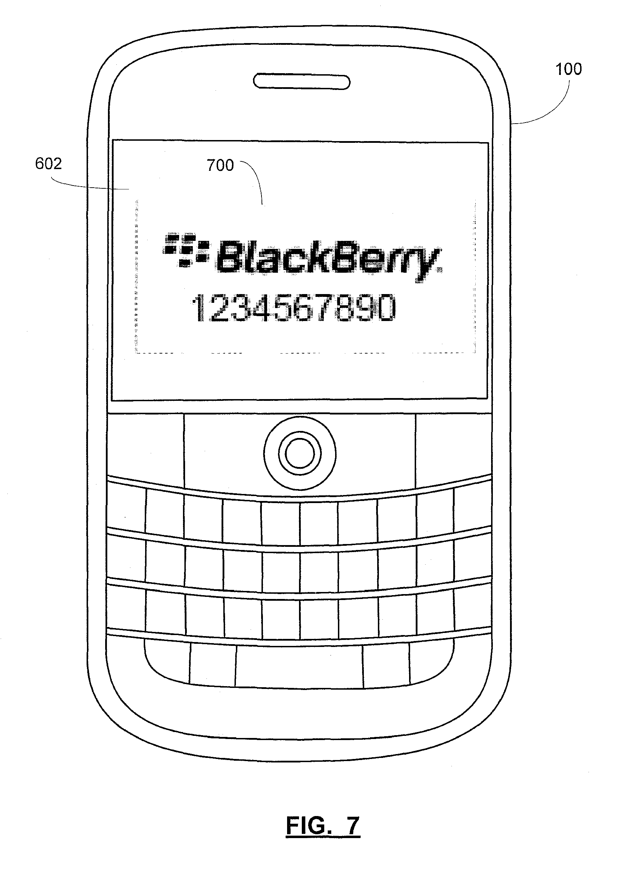

The destination image may take various forms and comprises a recognizable pattern associated with a destination. A barcode is one example of a recognizable pattern. Fig. 6 illustrates an example embodiment with a barcode image 600 displayed on a display screen 602 of a mobile device 100. Another example is illustrated in Fig. 7, where the destination image 700 is a combination of a word and a number. While in Fig. 6 the destination information is embedded in the destination image 602, in Fig. 7 each part of the destination image 700 is a piece of information. For example, the number may refer to an individual while the word may refer to one of many possible destinations for that individual.. One destination may be an email address while another destination may be a wireless picture frame. These destinations are all associated with the individual, such as John Smith from Oklahoma. Alternatively, only the word or the number may be used as the destination image.

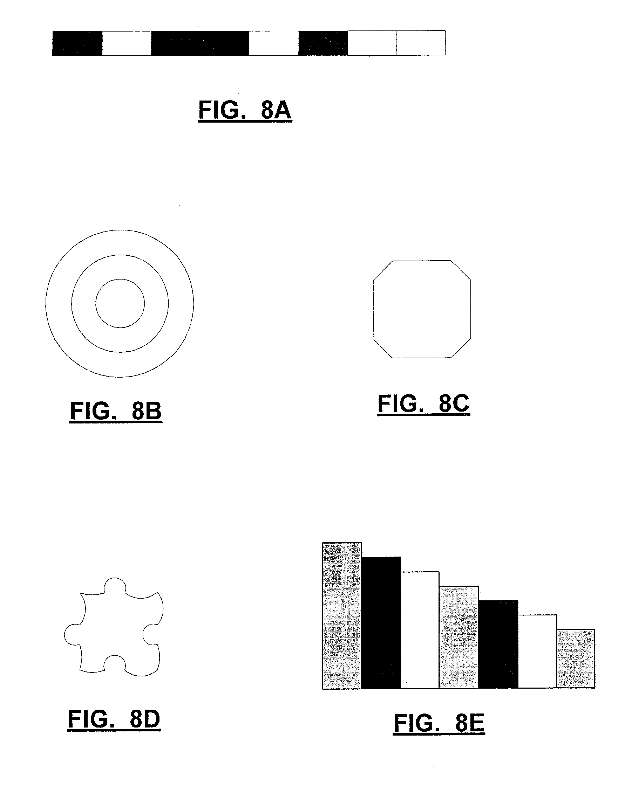

Figs. 8a-8e are alternative example embodiments of possible destination images composed of recognizable patterns. Fig. 8a is another form of a bar code with a pattern made from black and white rectangles arranged according to a predetermined sequence. This recognizable pattern may have the destination embedded therein or may be associated with previously stored destination information. Fig. 8b is a set of concentric circles arranged with respect to a predetermined pattern. The number of circles, the spacing between each circle, and shading used in the spacing between each circle may all be used to distinguish one destination image from another and to embed information. Fig. 8c is a geometric shape. Fig. 8d is a puzzle piece having a predetermined set of notches and knobs associated with destination information. Fig. 8e is set of decreasing and alternately shaded bars that are arranged in accordance with a predetermined sequence. Any recognizable pattern may be used as a destination image.

Referring back to Fig. 5, in step 502, the destination image may be stored, in accordance with some example embodiments. Storage may be done on the mobile device 100 or on the file sharing server 269. In one alternative embodiment, only the destination information is stored while in another alternative embodiment, the destination image and destination information are used immediately and therefore storing is not necessary.

In step 504, a file for sharing is received on the mobile device 100. Reception may include capturing a picture using the on-device camera 119, retrieving a previously stored document, downloading a file onto the mobile device 100, or receiving the file via email.

The file is matched with a destination image in step 506. This matching may occur on the mobile device 100 or at the file sharing server 269. If done at the file sharing server 269, the file is sent to the server 269 from the mobile device 100. In one example embodiment, the destination image is sent directly to the file sharing server 269 at the time of its creation and is also provided to the mobile device 100. The mobile device 100 will redirect the destination image to the file sharing server 269 so that a match can be made between the user and the destination image at the server end.

Matching the file with a destination image may take various forms, such as providing the user with a list of possible destinations in accordance with previously recorded destination images. For example, if a user has five different destination images, a prompt may ask the user which one of the five destination images should be matched with the given file. The user may be asked to select an image or to select a destination, the destination being associated with the image. For example, the user may be shown the images, or may be given the following choices: a) home email, b) grandparents email, c) wireless picture frame, d) Facebook™ profile, e) home network. If the user selects b) grandparents email, the destination information associated with this choice will be used. The prompt to the user may be automatic or manual. Alternatively, a setting of the mobile device 100 may be configured such that every time a picture is taken, it automatically gets sent to a predetermined destination. In this case, no prompt is necessary.

In step 508, the destination information is retrieved from the destination image. This may be done before or after a file is ready for sharing. For example, in one example embodiment, the mobile device 100 retrieves the destination image, extracts the destination information therefrom, stores the destination information and discards the destination image. In another embodiment, the destination image is obtained, and the destination information is extracted and used immediately. In this case, the file for sharing is ready to be sent and is waiting on the destination information. One example embodiment of this scenario is when the user has a file, such as a picture, on the mobile device 100 and wants to send it to a Facebook™ profile. The destination image may be generated by a plug-in application directly in the Facebook™ profile. The user may capture a picture of the destination image with the mobile device 100 and the file gets immediately transferred to the Facebook™ profile. If the destination information is embedded within a barcode, the barcode may be decoded optically or digitally, as is known by those skilled in the art.

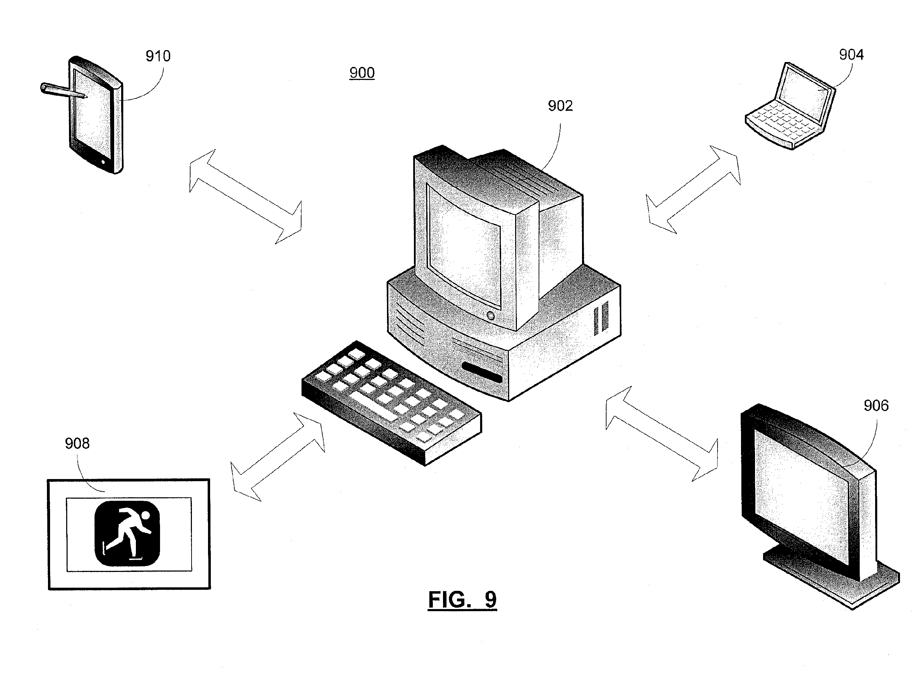

As per step 510, once the file is retrieved and the destination information is extracted, the file is sent to the destination. There can be more than one destination, and there can be an intermediate destination followed by a final destination. An example embodiment of an intermediate destination is illustrated in Fig. 9. A home network 900 is composed of a personal computer (PC) 902 and multiple peripherals. A laptop 904, a television 906, a wireless picture frame 908, and a personal digital assistant 910 are some of the peripherals which may compose this home network 900. Other examples of peripherals are multiple drives on the PC 902 (i.e. a USB key drive, a CD drive, a memory card drive, etc). Some of the peripherals may not be accessible directly by the mobile device 100, but can be accessed via the PC 902. The PC 902 therefore becomes an intermediate destination, and when a file is received, the file will be redirected to one or more of the peripherals within the home network 900. The file may be sent with accompanying final destination data such that the PC 902 may redirect the file appropriately. For example, the destination image may be sent with the file to the intermediate destination, and the intermediate destination will extract the final destination information from the destination image. Alternatively, the final destination data is extracted from the destination image by the mobile device 100 or the file sharing server 269 and only the final destination data is sent with the file to the intermediate destination.

The destination image may be generated at a given destination, or from an alternative source. For example, a user may log into Gmail™, and select an option called "send file here". An application will create the destination image within the Gmail™ account using all of the necessary information. The user can then take a picture of the destination image or send it via email to the mobile device. Similarly, a user may select a "send file here" option from a television with wireless access or a picture frame with wireless access. In both cases, an application present on the wireless television or the wireless picture frame will create a destination image using the appropriate information and display it for the user to take a picture or send it to the mobile device 100.

In another example embodiment, the destination image is generated from a source other than the given destination. For example, a website may be created for generating destination images. The user may access the website and provide the necessary information for the destination image to be generated with the destination information. In one example, only an email address is needed. In another example, an IP address of a computer or a social networking account with identification and password are needed. The user may be asked a series of questions, the answers being used to create the destination information provided with the destination image. Once the destination image is generated, it may be displayed to the user for capture by a camera 119 using the mobile device 100, it may be sent to the mobile device 100 via email, or it may be available for download to the mobile device 100.

Various frameworks for computer network protocols, existing and to be developed, may be used with the system and method described herein in order to send and receive the destination image, the destination information, and the file, as will be apparent to those skilled in the art.

While the present disclosure is primarily described as a method, a person of ordinary skill in the art will understand that the present disclosure is also directed to a system for carrying out the disclosed method and including apparatus parts for performing each described method block, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The embodiments of the present disclosure described above are intended to be examples only. Those of skill in the art may effect alterations, modifications and variations to the particular example embodiments without departing from the intended scope of the present disclosure. In particular, selected features from one or more of the above-described example embodiments may be combined to create alternative example embodiments not explicitly described, features suitable for such combinations being readily apparent to persons skilled in the art. The subject matter described herein in the recited claims intends to cover and embrace all suitable changes in technology.

## Claims

1. A method for sharing files from a mobile device comprising:
receiving a destination image on the mobile device, the destination image being a recognizable pattern having destination information associated thereto;
retrieving the destination information;
matching a file with the destination image; and
transferring the file to the destination using the destination information.

2. The method of claim 1, wherein receiving a destination image comprises capturing the destination image using the mobile device.

3. The method of claim 3, wherein retrieving the destination information comprises decoding a barcode.

4. The method of claims 2 or 3, wherein matching a file with the destination image comprises prompting the user to select a destination image after a picture has been captured using the mobile device.

5. The method of any one of claims 1 to 4, further comprising sending one of the destination image and the destination information to a remote server.

6. The method of claim 5, further comprising storing one of the destination image and the destination information on the remote server, matching a file comprises matching the file on the remote server, and transferring the file comprises transferring the file from the remote server.

7. The method of any one of claims 1 to 6, wherein transferring the file comprises transferring the file to at least one of another mobile device, a wireless frame, a social network website, and an email account.

8. The method of any one of claims 1 to 7, wherein the destination information comprises an intermediate destination and a final destination, and transferring the file comprises transferring the file to the intermediate destination, and then transferring the file from the intermediate destination to the final destination.

9. The method of claim 8, wherein the intermediate destination is a Personal Computer (PC), and wherein the PC redirects the file to at least one of a plurality of peripherals connected thereto as the final destination.

10. A mobile device comprising:
a memory for storing a destination image, the destination image being a recognizable pattern having destination information associated thereto;
a processor coupled to the memory; and
a file sharing application running on the processor and adapted for
retrieving the destination information;
matching a file with a destination image; and
transferring the file to the destination using the destination information.

11. The mobile device of claim 10, further comprising a camera for capturing pictures, and wherein the file is a picture.

12. The mobile device of claims 10 or 11, wherein the destination image is one of a barcode, a geometric shape, and a number.

13. The mobile device of any one of claims 10 to 12, wherein the destination information comprises an intermediate destination and a final destination.

14. The mobile device of any one of claims 10 to 12, wherein the destination information comprises a plurality of destinations.

15. A network comprising:
at least one mobile device comprising:
a memory for storing a destination image, the destination image being a recognizable pattern having destination information associated thereto;
a processor coupled to the memory; and
at least one server in communication with the at least one mobile device; and
a file sharing application residing at least in part on one of the at least one mobile device and the at least one server and adapted for:
retrieving the destination information;
matching a file with a destination image; and
transferring the file to the destination using the destination information.

16. The network of claim 15, further comprising at least one Personal Computer (PC) having a plurality of peripherals connected thereto, wherein the PC is the destination.

17. The network of claim 16, wherein the PC is an intermediate destination and is adapted to redirect the file to at least one of the peripherals as a final destination.

## Amended claims

### Amended claims in accordance with Rule 137(2) EPC.

**1.** A method for sharing files from a mobile device comprising:
receiving (500) one or more destination images (700) on the mobile device (100), each destination image (700) being a recognizable pattern having destination information associated thereto;
storing (502) said one or more destination images (700) on the mobile device (100);
receiving (504) a file for sharing by capturing a picture using the mobile device (100);
matching (506) the file with a destination image (700) by providing a prompt for selection of one of the destination images (700);
retrieving (508) the destination information associated with the selected destination image (700); and
transferring (510) the file to the destination using the destination information.

**2.** The method of claim 1, wherein receiving (500) a destination image (700) comprises capturing the destination image (700) using the mobile device (100).

**3.** The method of claims 1 or 2, wherein retrieving the destination information comprises decoding a barcode (600).

**4.** The method of any one of claims 1 to 3, further comprising sending one of the selected destination image (700) and the destination information to a remote server (269).

**5.** The method of claim 4, further comprising storing (502) one of the destination image (700) and the destination information on the remote server (269), retrieving (508) the destination information comprises retrieving (508) the destination information on the remote server (269), and transferring (510) the file comprises transferring the file from the remote server (269).

**6.** The method of any one of claims 1 to 5, wherein transferring the file comprises transferring the file to at least one of another mobile device (910), a wireless frame (908), a social network website, and an email account.

**7.** The method of any one of claims 1 to 6, wherein the destination information comprises an intermediate destination and a final destination, and transferring (510) the file comprises transferring the file to the intermediate destination, and then transferring the file from the intermediate destination to the final destination.

**8.** The method of claim 7, wherein the intermediate destination is a Personal Computer (PC) (902), and wherein the PC (902) redirects the file to at least one of a plurality of peripherals (910, 904, 906, 908) connected thereto as the final destination.

**9.** A mobile device (100) comprising:
a memory (106) for storing one or more destination images (700), each destination image (700) being a recognizable pattern having destination information associated thereto;
a processor (102) coupled to the memory (106); and
a file sharing application (145) running on the processor (102) and adapted for
receiving a file for sharing by capturing a picture using the mobile device (100);
matching the file with a destination image by providing a prompt for selection of one of the destination images (700);
retrieving the destination information associated with the selected destination image (700); and
transferring the file to the destination using the destination information.

**10.** The mobile device of claim 9, further comprising a camera (119) for capturing pictures, and wherein the file is a picture.

**11.** The mobile device of claims 9 or 10, wherein the destination image (700) is one of a barcode (600), a geometric shape, and a number.

**12.** The mobile device of any one of claims 9 to 11, wherein the destination information comprises an intermediate destination and a final destination.

**13.** The mobile device of any one of claims 9 to 11, wherein the destination information comprises a plurality of destinations.

**14.** A network (900) comprising at least one mobile device (100) as claimed in any one of claims 9 to 13.

**15.** The network (900) of claim 14, further comprising at least one Personal Computer (PC) (902) having a plurality of peripherals (910, 904, 906, 908) connected thereto, wherein the PC (902) is the destination.

**16.** The network of claim 15, wherein the PC (902) is an intermediate destination and is adapted to redirect the file to at least one of the peripherals (910, 904, 906, 908) as a final destination.
